(19) Europäisches Patentamt
European Patent Office
Office européen des brevets

(11) EP 0 493 545 B1

(12) FASCICULE DE BREVET EUROPEEN

(45) Date de publication et mention de la délivrance du brevet: **27.11.1996 Bulletin 1996/48**

(21) Numéro de dépôt: **91911641.8**

(22) Date de dépôt: **21.06.1991**

(51) Int Cl.[6]: **G01N 23/222**

(86) Numéro de dépôt international: **PCT/FR91/00498**

(87) Numéro de publication internationale: **WO 92/01925 (06.02.1992 Gazette 1992/04)**

(54) **APPAREIL DE MESURE PAR IRRADIATION NEUTRONIQUE PULSEE DE LA TENEUR EN SES DIVERS CONSTITUANTS D'UN MATERIAU EN VRAC ET PROCEDE DE DETERMINATION DE CETTE TENEUR METTANT EN OEUVRE CET APPAREIL DE MESURE**

VORRICHTUNG ZUR MESSUNG DES GEHALTES VON VERSCHIEDENEN SCHÜTTGUTKOMPONENTEN MIT PULSIERENDER NEUTRONENSTRAHLUNG UND VERFAHREN ZUR BESTIMMUNG DES GEHALTES MIT DIESER VORRICHTUNG

APPARATUS FOR MEASURING BY PULSED NEUTRONIC IRRADIATION THE CONTENTS OF THE VARIOUS CONSTITUENTS IN A BULK MATERIAL AND METHOD FOR DETERMINING SUCH CONTENTS BY IMPLEMENTATION OF THE MEASURING APPARATUS

(84) Etats contractants désignés:
**AT BE CH DE DK ES FR GB GR IT LI LU NL SE**

(30) Priorité: **25.07.1990 FR 9009505**

(43) Date de publication de la demande: **08.07.1992 Bulletin 1992/28**

(73) Titulaires:
- **ETAT FRANCAIS, MINISTERE DE L'EQUIPEMENT, DU LOGEMENT, DU TRANSPORT ET DE LA MER, LABORATOIRE CENTRAL DES PONTS ET CHAUSSEES**
  **75015 Paris (FR)**
- **CIMENTS LAFARGE**
  **F-92210 Saint-Cloud (FR)**

(72) Inventeurs:
- **ALEXANDRE, Jacques, Louis, Eugène**
  **F-44400 Rezé (FR)**
- **BARON, Jean-Pierre, Joel, François**
  **F-44620 La Montagne (FR)**
- **DEBRAY, Léon**
  **F-78590 Noisy-le-Roi (FR)**
- **FLEURET, Frédéric**
  **F-92400 Courbevoie (FR)**

(74) Mandataire: **Hirsch, Marc-Roger et al**
**Cabinet Hirsch**
**34 rue de Bassano**
**75008 Paris (FR)**

(56) Documents cités:
**EP-A- 0 007 759**
**FR-A- 2 618 225**
**US-A- 4 028 267**

- **NUCLEAR INSTRUMENTS AND METHODS no. 92, 1971, AMSTERDAM,NL pages 511 - 515; D. E. WOOD: 'INDUSTRIAL APPLICATIONS OF ACTIVATION ANALYSIS WITH 14 MeV NEUTRONS ' voir page 512, alinéa 2 - page 513, colonne de droite**
- **ADVANCES IN INSTRUMENTATION,VOL.28,N0 3,OCTOBRE 1973,PAGES 737,1-5;M.C. TAYLOR ET AL."A DUAL NEUTRON SOURCE TECHNIQUE FOR INDUSTRIAL PROCESS CONTROL" VOIR PAGE 737,2,COLONNE DE GAUCHE ,LIGNES 40-59**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 493 545 B1

## Description

La présente invention a pour objet un appareil nouveau de mesure, par irradiation neutronique pulsée, de la teneur en ses divers constituants d'un matériau en vrac. Elle se rapporte également à un procédé et à une installation de détermination de cette teneur mettant en oeuvre cet appareil de mesure.

Le problème se pose fréquemment dans l'industrie minière et dans l'industrie minérale, par exemple, dans les carrières et dans les cimenteries, de déterminer la teneur d'un matériau en ses différents éléments pour connaître la composition du matériau ou cru au fur et à mesure de son extraction ou de son introduction par exemple dans une unité cimentière. En fait, parmi les constituants ou éléments dont, dans les techniques cimentières, on se soucie le plus, on peut entre autres citer Si, Al, Fe, Ca, Mg, K, C et H.

Divers procédés sont connus pour réaliser une analyse en continu, de la teneur d'un matériau en ses différents constituants. On peut à ce titre, entre autres et parmi les plus récemment mis au point, citer ceux mettant en oeuvre une émission ou irradiation neutronique et qui permettent d'investiguer une zone définie, formant une sphère d'influence produite par la source émissive, à l'aide des techniques très précises d'analyse nucléaire.

L'analyse neutronique bénéficie en plus d'une grande simplicité de principe. La source est choisie pour que la réaction nucléaire d'interaction avec l'élément à analyser s'effectue dans le domaine énergétique des neutrons thermiques avec une énergie la plus basse possible, les neutrons produisant divers types de rayonnements gamma, notamment par le phénomène dit "d'activation neutronique", et par le phénomène dit de "capture" dont un exemple est la réaction:

$$Ca^{48}\ (n,\ gamma)Ca^{49}$$

qui permet de doser le calcium. Schématiquement, se produit lors du choc des neutrons avec le noyau cible (par exemple Ca comme évoqué ci-dessus) tout d'abord l'émission d'un rayonnement gamma prompt, puis l'isotope radioactif formé revient à son état stable par émission d'un rayonnement gamma, dit de décroissance. Ce schéma, typique du calcium (Ca), ne saurait être considéré comme caractéristique de l'ensemble des interactions neutroniques avec les différents matériaux servant de cible. La détection des types de rayonnements gamma émis par l'isotope produit permet, d'une part, l'identification du corps à doser (par mesures de l'énergie des divers rayonnements émis et de la période de l'élément produit) et, d'autre part, elle permet le dosage du corps par mesure de l'intensité du rayonnement émis (nombre d'impulsions recueillies dans le détecteur).

Pour mettre en oeuvre les principes évoqués ci-dessus, de nombreux systèmes ont été proposés permettant d'obtenir, au mieux, des résultats uniformes par fonctionnement en continu d'une installation d'analyse à bombardement neutronique.

FR-A-2 618 225 décrit un procédé, un appareil et une installation utilisant une source de neutrons que l'on actionne par intermittences à des périodes fixes. Un détecteur de rayonnement gamma compte les photons uniquement après l'arrêt de l'émission des neutrons, pendant des temps distincts auxquels correspondent respectivement les phénomènes de capture et d'activation neutroniques. Les différents signaux sont traités numériquement selon deux voies séparées dont on combine automatiquement les résultats. Aucun prélèvement d'échantillons n'est nécessaire. Chaque application nécessite une définition correcte des bandes d'énergie à considérer selon les éléments cherchés.

Le procédé et les dispositifs selon FR-A-2 618 225 tout en constituant un progrès par rapport aux procédés et dispositifs connus donnent lieu à des difficultés que l'on n'est pas encore parvenu à surmonter de façon optimale. En effet, la sphère d'influence, produite à partir de la source ponctuelle et au sein de laquelle a lieu la réaction nucléaire, est tangente à la paroi d'une trémie conique de déversement du matériau. Il peut donc de ce fait exister des sources d'erreurs systématiques qui sont dues à la présence plus ou moins permanente de talus résiduels de matière qui se créent au cours de la vidange de la trémie et qui, du fait que les particules sont agglomérées et collent, peuvent donner lieu à des erreurs systématiques de la mesure. Il faut aussi citer le fait que deux isotopes radioactifs peuvent décroître en émettant des rayonnements d'énergie voisine ou égale, ce qui provoque une interférence énergétique. Tel est le cas pour les réactions:

$$Fe^{56}(n,\ p)Mn^{56}$$

$$Al^{27}(n,\ p)Mg^{27}$$

De plus, la définition énergétique correcte de la source doit être assurée: en effet, la "section efficace d'activation" directement proportionnelle à la probabilité de chocs, et donc de réaction nucléaire, varie avec l'énergie du neutron

projectile. Si la répartition spectrale de ce dernier est trop large, un même isotope radioactif peut être obtenu à partir de deux ou plusieurs éléments. Ainsi, par exemple, en écriture synthétique:

$$\left.\begin{array}{ll} Al^{27} & (n,\ gamma) \\ Si^{28} & (n,\ p) \\ P^{31} & (n,\ \alpha) \end{array}\right\} \longrightarrow Al^{28}$$

Un tel phénomène, s'il est physiquement présent, peut rendre impossible le dosage d'un élément. Seul l'étalonnage soigneusement réalisé et le balayage en impulsions par valeurs discrètes et significativement distinctes, peuvent permettre d'éliminer ces causes d'erreurs.

On connaît également des procédés de ce type décrits par exemple dans EP-A-0 095 900, EP-A-0 171 256, AT-B-295 893, GB-A-2 101 304 et FR-A-1 514 030 qui donnent lieu à des inconvénients systématiques tant à des difficultés lors de la mise en oeuvre des mesures que relativement à la précision obtenue.

Le document US-A-4 028 267 décrit un appareil de mesure par irradiation neutroniqu, de la teneur en ses différents constituants d'un matériau en vrac, comprenant une enceinte, une bande sans fin permettant d'assurer le passage en continu du matériau en vrac dans cette enceinte, une source d'irradiation neutronique et des moyens de mesure des divers rayonnements gamma produits par le matériau en vrac qui constitue la cible des neutrons émis par la source, disposés de part et d'autre de la bande sans fin dans ladite enceinte.

Le document ADVANCES IN INSTRUMENTATION, Vol. 28 n°3, Octobre 1973, pages 737, 1-5, M.C. Taylor et al, intitulé "A Dual Control Source Technique For Industrial Process Control" décrit un procédé de détermination de la teneur en ses divers constituants d'un matériau en vrac, dans lequel le matériau en vrac, en déplacement continu, est convoyé dans une zone d'irradiation et de mesure de rayonnements gamma produits par cette irradiation.

Ces deux documents proposent d'analyser des pics des spectres.

La présente invention permet de pallier les inconvénients des procédés et appareils décrits dans l'art antérieur autre que celui de FR-A-2 618 225. De plus, il apporte un perfectionnement au procédé et appareil décrits dans FR-A-2 618 225.

En fait, la présente invention a tout d'abord pour objet un appareil de mesure, par irradiation neutronique, de la teneur en ses différents constituants d'un matériau en vrac, comprenant une enceinte, une bande sans fin permettant d'assurer le passage en continu du matériau en vrac dans cette enceinte, une source d'irradiation neutronique et des moyens de mesure des divers rayonnements gamma produits par le matériau en vrac qui constitue la cible des neutrons émis par la source, disposés de part et d'autre de la bande sans fin dans ladite enceinte, caractérisé en ce que ladite enceinte est formée d'une matière dont la molécule comporte une proportion élevée d'hydrogène, en ce que la dite source est une source neutronique pulsée, et en ce que les dits moyens de mesure mesurent les divers rayonnements gamma émis par le matériau en vrac dans sur une plage continue d'énergies.

Selon une forme d'exécution de cet appareil de mesure, la source est couverte de moyens de freinage des neutrons émis consistant en un blindage formé de métal lourd. A ce titre, on peut par exemple employer du plomb.

La présente invention a également pour objet un procédé de détermination de la teneur en ses divers constituants d'un matériau en vrac, dans lequel le matériau en vrac, en déplacement continu, est convoyé dans une zone d'irradiation et de mesure de rayonnements gamma produits par cette irradiation, ce procédé étant caractérisé en ce que les dits rayonnements gamma émis par le matériau en vrac sont mesurés sur une plage continue d'énergies, en ce que les données du spectre résultant de cette mesure sont adressées vers une zone de calcul dans laquelle ont été stockées des données des spectres étalons résultant des mesures effectuées dans des conditions identiques et sur la même plage continue d'énergie sur chacun des constituants à l'état pur dont on recherche la présence, dans ladite zone de calcul, le traitement numérique étant réalisé par la méthode consistant à segmenter le spectre mesuré en bandes d'énergie et à comparer chaque hauteur du segment avec les hauteurs des segments de chacune des bandes d'énergie correspondantes des spectres étalons afin de déterminer sur au moins une partie desdites bandes d'énergie les valeurs de chacune des teneurs et d'en retirer une valeur moyenne résultante.

Selon une forme de réalisation de ce procédé, le matériau, préalablement à son entrée dans la zone d'irradiation et de mesure des rayonnements gamma, est rendu homogène dans tout le volume investigué, la répartition ou distribution granulométrique du matériau étant amenée à un profil très proche de celui de la répartition granulométrique des constituants purs sur lesquels l'étalonnage a été effectué. Si nécessaire, ceci est obtenu par une succession de tamisages permettant de réaliser une alternance de couches de particules de diamètre moyen prédéterminé.

Selon encore une autre forme de réalisation de ce procédé, la détermination en continu de la teneur en ses divers constituants d'un matériau en vrac par irradiation neutronique pulsée est réalisée par mesure sélective de l'émission gamma spécifique émise par ces éléments, l'émission de neutrons se faisant par exemple par un tube générateur de

neutrons commandé pour interrompre périodiquement l'émission de neutrons, les phases de mesure se faisant pendant ou après l'arrêt de l'émission neutronique de manière à fournir une indication sur les spectres des rayons gamma de capture et/ou d'activation.

Selon une autre forme encore de réalisation de ce procédé, la détermination continue est réalisée dans une zone d'échantillonnage réduite dans laquelle les parties fixes de l'environnement sur lesquelles réagissent les neutrons sont éliminées, de telle sorte que le détecteur donne un signal exploitable, appelé spectre expérimental, dont le traitement numérique ultérieur permettra de déterminer la teneur des matériaux analysés par calcul matriciel avec obtention des régions de confiance relatives à la détermination, à partir du spectre continu expérimental analysé.

L'invention a également pour objet une installation de détermination par irradiation neutronique pulsée de la teneur en ses différents constituants d'un matériau en vrac, comprenant un appareil de mesure comportant une source d'irradiation neutronique et des moyens de mesure des divers rayonnements gamma, des moyens assurant la circulation en continu dudit matériau en vrac, des moyens de réception des données des spectres résultants et des moyens de calcul, caractérisée en ce la dite source est une source neutronique pulsée, et en ce que les dits moyens de mesure mesurent les divers rayonnements gamma émis par le matériau en vrac sur une plage continue d'énergies, en ce que les moyens de calcul permettent une comparaison de ces données du spectre avec celles qui résultent des mesures effectuées dans des conditions identiques sur chacun des constituants purs dont on recherche la présence, et en ce qu'elle comprend des moyens de lecture du résultat du calcul moyenné.

Bien entendu, pour l'obtention de résultats fiables, il est nécessaire que les mesures soient effectuées sur des constituants purs se trouvant en un état granulométrique pratiquement semblable.

L'un des buts de la présente invention est précisément de rendre plus fiables les déterminations de la composition d'un matériau en vrac. Par ailleurs, l'expérience montre qu'il est indispensable que la progression des matières examinées présente une certaine analogie, sur le plan structurel, avec celle d'un système de grains de différentes grosseurs soumis à une translation analogue à un "écoulement" laminaire. A l'optimum, il faudrait que chaque tranche de matériau de défilement, de même épaisseur, présente, à la fois, la même masse volumique moyenne, le même diamètre particulaire moyen et la même vitesse linéaire, laquelle vitesse linéaire peut aisément être rendue constante. Un autre objet de la présente invention consiste à rendre minimales les erreurs dues à l'hétérogénéité de la répartition massique et granulométrique et donc dues à l'anisotropie qui en résulte dans la répartition du rayonnement dont le capteur ne reçoit qu'un cône correspondant à un angle solide défini.

D'autres buts, avantages et caractéristiques apparaîtront à la lecture de la description d'un mode de réalisation de l'invention, faite à titre non limitatif et en regard du dessin annexé, dans lequel:

- la figure 1 est une vue schématique d'une installation selon l'invention dans laquelle la bande sans fin passe dans l'appareil de mesure selon l'invention;
- la figure 2 est une coupe à plus grande échelle, faite selon la ligne Z-Z de la figure 1;
- la figure 3 représente, à une échelle agrandie, la coupe de la bande sans fin représentée sur la figure 2;
- la figure 4 illustre l'allure de spectres détectés sur quatre éléments purs soit Si, Ca, Al et Fe entre 2,5 et 9 MeV;
- la figure 5 représente d'une part un spectre obtenu sur une matière crue dont on détermine la composition et, d'autre part, un spectre reconstitué à partir des spectres d'éléments purs; les graphiques représentent les spectres obtenus par un comptage entre 0,5 et 2,5 MeV (courbes de gauche) et pour un comptage entre 2,5 et 9 MeV (courbes de droite).

La figure 1 représente une vue schématique de l'appareil de mesure 1 dans lequel passe une bande sans fin 2 sur laquelle est disposé un matériau en vrac 3 dont on souhaite mesurer la teneur en ses divers constituants pendant le déplacement de la bande 2. La mesure devant être effectuée sur une couche 4 de matériau présentant une épaisseur de préférence constante, des moyens d'arasement 5 sont disposés en amont de l'appareil 1. Des moyens de réception 6 des données des spectres, des moyens de calcul 7 permettant une comparaison des données du spectre avec celles des spectres étalons et des moyens de lecture 8 du résultat du calcul moyenné, sont prévus.

La figure 2 représente une coupe selon le plan Z-Z de la figure 1, à une échelle agrandie. Cet appareil 1 dans lequel la couche 4 de matériau supportée par la bande sans fin 2 circule, est formé d'un boîtier 11 en polyéthylène haute densité formant une enceinte 12. Le polyéthylène est un matériau dont la molécule comporte de nombreux atomes d'hydrogène et du fait de la présence de cette proportion élevée d'atomes d'hydrogène, le polyéthylène a la propriété d'éliminer, par diffusion élastique, l'impact sur le comptage des rayons gamma d'énergie très basse.

L'appareil 1 comporte dans sa soute 13, une source de neutrons 14 consistant en un tube générateur de neutrons placé en-dessous de la bande sans fin 2 en déplacement. En fait, cet appareil 1 comporte une zone d'irradiation neutronique pulsée due à l'action des neutrons émis par la source 14 et une zone de mesure des rayonnements gamma par un détecteur 16 qui, dans le présent cas, est un compteur des rayonnements gamma émis par l'ensemble des éléments présents dans la masse 4 en défilement continu. Le détecteur 16 est placé dans l'enceinte 12, de l'autre côté de la bande sans fin 2 par rapport à la source 14. Cette source 14 est couverte par un blindage assurant le freinage

ou ralentissement des neutrons émis, formé par trois parois 17 en métal lourd, par exemple en plomb. Les neutrons émis par la source 14 traversent ainsi la masse de matériau en vrac 4 en déplacement, dont l'épaisseur e (voir figure 3) est définie par la lame 5.

Le flux nominal de neutrons peut être de l'ordre de $10^8$ à $10^{10}$ particules par seconde. Le détecteur 16 est un élément du type compteur à scintillation utilisant, par exemple, de l'iodure de sodium activé au thallium. Le compteur est lui-même associé à deux blindages protecteurs 18 formant écrans obliques, en plomb, qui l'isole des réflexions et autres influences parasitaires.

On a représenté sur la figure 3, une vue en coupe transversale au sens du défilement de la couche 4 du matériau. En fait, on a représenté la partie de la couche qui est significative pour la mesure; dans un mode de réalisation préféré de l'invention, il s'agit d'une "brique" 19 ayant une hauteur d'environ 12 cm et dont la largeur est d'environ 36 cm.

Pour un débit massique de 1 000 t/h, ce type de géométrie a permis de réaliser des mesures reproductibles et fiables sur une plage d'énergie comprise entre 0 et 10 MeV. En fait, le détecteur 16 est relié aux moyens de réception 6 des données des spectres, qui transmettent leurs données aux moyens de calcul 7 permettant une comparaison avec les données étalons. Des moyens de lecture 8 permettent de visualiser le résultat obtenu.
Les éléments pris en considération et dont on cherche la teneur dans le cru, par exemple, sont au nombre de 8. Une adaptation du procédé à un nombre différents d'éléments fait partie du savoir-faire de l'homme de l'art spécialisé en radio-analyse nucléaire. Les éléments typiquement analysés sont entre autres: Fe, Si, Ca, Al, K, C, Mg, H. Dans un mode de réalisation, deux voies de mesure sont utilisées: la première prend en compte les rayons gamma dus aux phénomènes de capture et d'activation; la seconde ne retient que les rayons gamma d'activation. Le spectre final (nombre de coups par seconde) est obtenu par différence et donne le spectre gamma de capture. Un enseignement à cet égard est donné dans FR-A-2 618 225.

Bien entendu, souhaiterait-on prendre en compte d'autres types de rayonnements gamma, par exemple, les rayons gamma dits "inélastiques"; à cet effet, le nombre de voies de mesure serait adéquatement adapté.

Dans le cas de l'emploi de deux voies de mesure, l'information est recueillie sous forme de spectres de bandes d'énergie qui dépendent essentiellement de quatre paramètres:

1. le flux neutronique dans la masse irradiée (neutrons "thermiques"),
2. la masse volumique de la masse irradiée,
3. la teneur en eau,
4. les concentrations $C_i$ en les divers éléments i à identifier et dont la teneur doit être déterminée.

La figure 4 représente l'allure de spectres obtenus pour 4 constituants purs, soit Si, Ca, Al et Fe pour une énergie de 2,5 à 9 MeV. Pour ne pas surcharger la figure, les spectres ont été limités à ces quatre constituants purs; les spectres obtenus pour d'autres constituants purs sont du même type.

La figure 5 illustre l'allure du spectre en énergie dans le cas d'un cru dont on veut déterminer la teneur en 8 composants. Elle montre d'une part le spectre expérimental obtenu sur cette matière crue, dont on veut déterminer la composition et, d'autre part, en superposition, le spectre obtenu après calcul de la composition, par combinaison des huit spectres d'éléments purs: on constate que le spectre calculé est très proche du spectre détecté sur la matière crue de telle sorte qu'il est même difficile de voir les différences entre les deux spectres sur la figure 5 qui les représente en superposition. En fait, le spectre calculé approche le spectre obtenu expérimentalement à mieux de 5%.

Chaque ordonnée $N_{Ei}$ correspondant à l'intervalle d'énergie [Ei, Ei +$\Delta$Ei] est un foisonnement de la contribution des chocs neutroniques avec les constituants dont on cherche la teneur. Cette situation est analogue dans chacun des 1 024 canaux d'analyse spectrale d'amplitude $\Delta$Ei.

La détermination de la teneur en les différents éléments contenus dans le matériau en vrac est basée sur un ensemble de spectres du type de ceux de la figure 4. Dans le cas où, par exemple, on souhaite déterminer les teneurs de huit éléments, il faut évidemment avoir obtenu les huit spectres, tous différents, correspondant à chacun des éléments purs dont on souhaite déterminer la teneur dans le matériau en vrac.

Ces spectres sont enregistrés sur une plage d'énergie photonique de 0 à 10 MeV, par exemple sur 1 024 canaux ($2^{10}$). L'ordonnée est le nombre d'impulsions comptées par canal. On segmente le spectre obtenu pour un matériau en défilement en 1 024 bandes d'énergie et on détermine la hauteur du segment d'au moins une partie des 1 024 bandes d'énergie; par ailleurs, on détermine la hauteur obtenue pour chaque spectre étalon des mêmes bandes d'énergie. Un traitement numérique sur micro-ordinateur permet d'obtenir les teneurs recherchées, en l'occurrence les huit teneurs recherchées. Son principe mathématique peut être exprimé par les équations suivantes, mises sous forme matricielle, qui sont à la base de la résolution numérique permettant l'obtention de la teneur en les différents composants contenus dans le matériau en vrac transporté, dans le cas précité l'obtention de 8 teneurs basée sur 1 024 ($2^{10}$) bandes d'énergie. Ce traitement numérique est basé sur la résolution par les méthodes de l'analyse numérique des équations (une par canal) des inconnues correspondant aux teneurs. L'expression analytique en est:

$$e_1 = P_1^1 t_1 + P_1^2 t_2 + P_1^3 t_3 + P_1^4 t_4 + P_1^5 t_5 + P_1^6 t_6 + P_1^7 t_7 + P_1^8 t_8$$

$$e_2 = P_2^1 t_1 + P_2^2 t_2 + P_2^3 t_3 + P_2^4 t_4 + P_2^5 t_5 + P_2^6 t_6 + P_2^7 t_7 + P_2^8 t_8$$

$$\vdots$$

$$e_n = P_n^1 t_1 + P_n^2 t_2 + P_n^3 t_3 + P_n^4 t_4 + P_n^5 t_5 + P_n^6 t_6 + P_n^7 t_7 + P_n^8 t_8$$

où:

- $e_j$ correspond au comptage relatif au $j^{ième}$ canal choisi, sur le spectre obtenu pour le matériau inconnu;
- $p_j^i$ sont les différents comptages sur chaque spectre d'élément pur numéroté i dans ce même canal numéroté j;
- j désigne le $j^{ième}$ canal choisi parmi les 1 024 (cas de l'exemple), il peut être choisi éventuellement au hasard;
- i correspond au nombre d'éléments dont on recherche la teneur, dans l'exemple évoqué, peut avoir une valeur comprise entre 1 et 8;
- $t_i$ sont les teneurs;
- n a une valeur quelconque entre 8 et 1 024.

En fait, quoique l'on ait, à titre d'exemple, indiqué que l'on opérait sur 1 024 canaux ou segments, on peut se limiter à un nombre de canaux inférieur ou employer un nombre de canaux supérieur. Il faut, en tous les cas que n soit suffisamment grand pour permettre l'obtention d'une valeur moyennée significative. On peut programmer les moyens de calcul pour que les canaux soient choisis de façon aléatoire, en un nombre suffisamment grand pour obtenir une valeur moyenne significative.

Le procédé et le dispositif de détermination en continu qui en résulte se sont avérés d'une application industrielle aisée et les manipulations nécessaires requièrent certes une grande précision mais elles peuvent être apprises par un personnel de qualification moyenne.

Bien entendu, la présente invention n'est pas limitée aux modes de réalisation décrits et représentés mais elle est susceptible de nombreuses variantes accessibles à l'homme de l'art.

## Revendications

**1.** Appareil de mesure, par irradiation neutronique, de la teneur en ses différents constituants d'un matériau en vrac, comprenant une enceinte (12), une bande sans fin (2) permettant d'assurer le passage en continu du matériau en vrac dans cette enceinte, une source d'irradiation neutronique (14) et des moyens de mesure (16) des divers rayonnements gamma produits par le matériau en vrac qui constitue la cible des neutrons émis par la source, disposés de part et d'autre de la bande sans fin dans ladite enceinte (12),

caractérisé en ce que ladite enceinte (12) est formée d'une matière dont la molécule comporte une proportion élevée d'hydrogène, en ce que la dite source (14) est une source neutronique pulsée, et en ce que les dits moyens de mesure (16) mesurent les divers rayonnements gamma émis par le matériau en vrac sur une plage continue d'énergies.

**2.** Appareil de mesure selon la revendication 1, caractérisé en ce que la source est couverte de moyens de freinage ou ralentissement des neutrons pulsés émis, consistant en un blindage formé de métal lourd.

**3.** Un procédé de détermination de la teneur en ses divers constituants d'un matériau en vrac, dans lequel le matériau en vrac, en déplacement continu, est convoyé dans une zone d'irradiation et de mesure de rayonnements gamma produits par cette irradiation, ce procédé étant caractérisé en ce que les dits rayonnements gamma émis par la matériau en vrac sont mesurés sur une plage continue d'énergies, en ce que les données du spectre résultant de cette mesure sont adressées vers une zone de calcul dans laquelle ont été stockées des données des spectres étalons résultant des mesures effectuées dans des conditions identiques sur chacun des constituants à l'état pur dont on recherche la présence, dans ladite zone de calcul, le traitement numérique étant réalisé par la méthode consistant à segmenter le spectre mesuré en bandes d'énergie et à comparer chaque hauteur du segment avec les hauteurs des segments de chacune des bandes d'énergie correspondantes des spectres étalons afin de déterminer sur au moins une partie desdites bandes d'énergie les valeurs de chacune des teneurs et d'en retirer une valeur moyenne résultante.

4. Procédé selon la revendication 3, dans lequel la détermination en continu de la teneur en ses divers constituants d'un matériau en vrac par irradiation neutronique pulsée est réalisée par mesure sélective de l'émission gamma spécifique émise par ces éléments, l'émission de neutrons se faisant par un tube générateur de neutrons commandé pour interrompre périodiquement l'émission de neutrons, les phases de mesure se faisant pendant ou après l'arrêt de l'émission neutronique de manière à fournir une indication sur le spectre des rayons gamma de capture et/ou d'activation.

5. Un procédé selon la revendication 3 ou 4, dans lequel la répartition ou distribution granulométrique du matériau a un profil très proche de celui de la répartition granulométrique des constituants purs sur lesquels l'étalonnage a été effectué.

6. Procédé selon l'une quelconque des revendications 3 à 5, dans lequel la détermination continue est réalisée dans une zone d'échantillonnage réduite dans laquelle les parties fixes de l'environnement sur lesquelles sont en interaction les neutrons sont totalement éliminées, de telle sorte que le détecteur donne un signal exploitable, appelé spectre expérimental, dont le traitement numérique ultérieur permettra de déterminer la teneur des matériaux analysés soit par calcul matriciel avec obtention des régions de confiance relatives à la détermination, à partir du spectre continu expérimental analysé.

7. Installation de détermination par irradiation neutronique pulsée de la teneur en ses différents constituants d'un matériau en vrac, comprenant un appareil de mesure (1) comportant une source d'irradiation neutronique (14) et des moyens de mesure (16) des divers rayonnements gamma, des moyens (2) assurant la circulation en continu dudit matériau en vrac, des moyens de réception des données des spectres résultants (6) et des moyens de calcul (7),
caractérisée en ce la dite source (16) est une source neutronique pulsée, et en ce que les dits moyens de mesure (16) mesurent les divers rayonnements gamma émis par le matériau en vrac sur une plage continue d'énergies, en ce que les moyens de calcul (7) permettent une comparaison de ces données du spectre avec celles qui résultent des mesures effectuées dans des conditions identiques sur chacun des constituants purs dont on recherche la présence, et en ce qu'elle comprend des moyens de lecture (8) du résultat du calcul moyenné.

**Patentansprüche**

1. Vorrichtung zum Messen des Gehaltes unterschiedlicher Bestandteile eines Schüttgutes durch Neutronenbestrahlung umfassend ein Gehäuse (12), ein Endlosband (2), welches den kontinuierlichen Durchtritt von Schüttgut in dem Gehäuse sichert, eine Neutronenstrahlungsquelle (14) und Meßeinrichtungen (16) für verschiedene Gammastrahlungen, erzeugt durch das Schüttgut, welches das Target für die von der Quelle emittierten Neutronen bildet, welche auf beiden Seiten des Endlosbandes in dem Gehäuse (12) angeordnet somd,
dadurch gekennzeichnet, daß
das Gehäuse (12) gebildet ist aus einem Material, dessen Molekül einen hohes Verhältnis an Wasserstoff enthält, daß die Quelle (14) eine gepulste Neutronenquelle ist und, daß die Meßeinrichtungen (16) die von dem Schüttgut emittierten unterschiedlichen Gammastrahlungen in einem kontinuierlichen Energiebereich messen.

2. Meßvorrichtung nach Anspruch 1, dadurch gekennzeichnet, daß die Quelle bedeckt ist mit einer Abbrems- oder Verlangsamungseinrichtung für die emittierten gepulsten Neutronen, wobei sie eine Abschirmung aus Schwermetall gebildet, bildet.

3. Bestimmungsverfahren des Gehaltes der unterschiedlichen Bestandteile eines Schüttgutes, bei welchem das Schüttgut in kontinuierlicher Versetzung in einer Bestrahlungs- und Gammastrahlenmeßzone gefördert wird, wobei die Gammastrahlen durch die Bestrahlung erzeugt werden, wobei das Verfahren dadurch gekennzeichnet ist, daß die Gammastrahlungen emittiert von dem Schüttgut gemessen werden in einem kontinuierlichen Energiebereich, und daß die Daten des resultierenden Spektrums dieser Messung zu einer Berechnungszone geführt werden, in welcher Daten von Vergleichsspektren gespeichert sind, und zwar resultierend aus Messungen, durchgeführt unter identischen Bedingungen für jeden der Bestandteile, deren Vorhandensein gesucht ist, und zwar im Reinzustand, und zwar in der Berechnungszone, wobei die numerische Behandlung durchgeführt wird, die umfaßt, Segmentieren des gemessenen Spektrums in Energiebänder und Vergleichen jeder Segmenthöhe mit den Segmenthöhen

der jeweiligen Energiebänder, die den Vergleichsspektren entsprechen, um somit zumindest für einen Teil der Energiebänder die Werte der jeweiligen Gehalte zu bestimmen, um daraus einen resultierenden Mittelwert abzuleiten.

4. Verfahren nach Anspruch 3, bei welchem die kontinuierliche Bestimmung des Gehaltes der unterschiedlichen Bestandteile eines Schüttgutes durch gepulste Neutronenstrahlung durchgeführt wird, und zwar durch selektive Messung der spezifischen Gammaemission, emittiert durch diese Elemente, wobei die Neutronenemission über ein Neutronenerzeugungsrohr erfolgt, welches gesteuert ist zum periodischen Unterbrechen der Neutronenemission, wobei die Meßphasen während oder nach der Unterbrechung der Neutronenemission stattfinden, so daß eine Indikation über das Gammastrahlungseinfangs- und/oder Aktivierungsspektrum erhalten wird.

5. Verfahren nach Anspruch 3 oder 4, in welchem die granulometrische Verteilung des Gutes ein Profil aufweist, welches der granulometrischen Verteilung der reinen Bestandteile sehr nahe kommt, bezüglich welcher der Vergleich bzw. die Normierung durchgeführt wurde.

6. Verfahren nach einem der Ansprüche 3 bis 5, in welchem die kontinuierliche Bestimmung durchgeführt wird in einer reduzierten Probennahmezone, in welcher die festgelegten Umgebungsabschnitte mit welchen die Neutronen wechselwirken vollständig eliminiert sind, so daß der Detektor ein auswertbares Signal liefert, welches Experimentalspektrum genannt wird, dessen numerische spätere Behandlung es erlauben wird, den Gehalt der analysierten Materialien zu bestimmen, und zwar über Matrizenberechnung zum Erhalten von zuverlässigen Bereichen bezüglich der Bestimmung ausgehend von dem analyisierten kontinuierlichen Experimentalspektrum.

7. Anordnung zum Bestimmen des Gehaltes der unterschiedlichen Bestandteile eines Schüttgutes durch gepulste Neutronenbestrahlung umfassend eine Meßvorrichtung (1), welche aufweist eine Neutronenstrahlungsquelle (14) und Meßeinrichtungen (16) für verschiedene Gammastrahlungen, eine Einrichtung (2), welche eine kontinuierliche Zirkulation des Schüttgutes sichert, eine Empfangseinrichtung für Daten der resultierenden Spektren (6) und eine Berechnungseinrichtung (7),
dadurch gekennzeichnet, daß
die Quelle (16) eine gepulste Neutronenquelle ist, und daß die Meßeinrichtungen (16) die unterschiedlichen Gammastrahlungen messen, welche durch das Schüttgut emittiert werden, und zwar in einem kontinuierlichen Energiebereich, und daß die Berechnungseinrichtung (7) einen Vergleich ermöglicht zwischen den Daten des Spektrums mit jenen, welche von Messungen resultieren, die unter identischen Bedingungen für jedes der reinen Bestandteile, deren Vorhandensein gesucht ist, durchgeführt wurden, und daß die Anordnung eine Leseeinrichtung (8) für das gemittelte Berechnungsergebnis umfaßt.

## Claims

1. An apparatus for measuring the content of the various constituents of a bulk material using pulsed neutron radiation comprising an enclosure (12), an endless belt (2) providing continuous passage of a bulk material into said enclosure, a source of neutron radiation (14) and measurement means (16) for the various gamma radiations produced by the bulk material constituting the target for the neutrons emitted by said source arranged on either side of said endless belt inside enclosure (12), characterized in that said enclosure (12) is constituted of a material the molecule of which includes a high proportion of hydrogen, and in that said source is a pulsed neutron radiation source (14), and in that said measuring means (16) measure the various gamma radiations emitted by said bulk material over a continuous range of energies.

2. A measurement apparatus according to claim 1 characterized in that the source is covered by means for stopping or slowing down the pulsed neutrons emitted consisting of a shield formed of a heavy metal.

3. A method for determining the content of the various constituents of a bulk material in which said bulk material is continuously moving and is conveyed through an irradiation and gamma radiation measurement region, said method being characterized in that said gamma radiation emitted by said bulk material is measured over a continuous range of energies, in that the spectral data resulting from measurement are delivered to a computing area where standard spectral data are stored resulting from measurements carried out under identical conditions for each one of constituents, the presence of which is to be determined, in the pure state, digital processing being carried out by a method consisting of dividing the measured spectrum up into energy bands and comparing the height of each segment with the heights of the segments for each one of the corresponding standard spectrum energy bands in

order to determine, on at least part of said energy bands, values for each one of said contents and to deduce therefrom a resulting average value.

**4.** A method according to claim 3, in which continuous determination of the content of the various constituents of a bulk material using pulsed neutron radiation is carried out by selective measurement of gamma radiation emitted that is specific to said elements, neutron emission being provided by a neutron generating tube, controlled whereby neutron emission is periodically interrupted, the measurement phases occurring during or after termination of neutron emission in order to supply an indication of the spectra of the various gamma radiations.

**5.** A method according to claim 2 or 3, in which the particle size distribution of the material has a profile that is very close to the particle size distribution of the pure constituents used to obtain the standard values.

**6.** A method according to any one of claims 3 to 5, in which continuous determination is carried out in a reduced sampling region, in which the unvarying parts of the environment with which the neutrons are interacting are completely eliminated thereby leaving a usable signal from the detector defining an experimental spectrum, subsequent digital processing of which enables the analyzed material content to be determined by matrix computation yielding, starting from the analyzed continuous experimental spectrum, areas of confidence relating to the result of said determination.

**7.** An installation for determining the content of the various constituents of a bulk material using pulsed neutron irradiation characterized in that it employs measurement apparatus (1) comprising a source of neutron irradiation (14) and measuring means (16) for the various types of gamma radiation, means (2) for providing continuous circulation of said bulk material, means (6) for receiving the data for the resulting spectra and computing means (7) characterized in that said source (16) is a pulsed neutron radiation source, and in that said measuring means (16) measure the various gamma radiations emitted by said bulk material over a continuous range of energies, in that said computing means (7) enable a comparison to be made of said spectral data with data resulting from measurements carried out under identical conditions on each one of the pure constituents the presence of which is being investigated, and in that it further comprises readout means (8) for the averaged computed result.

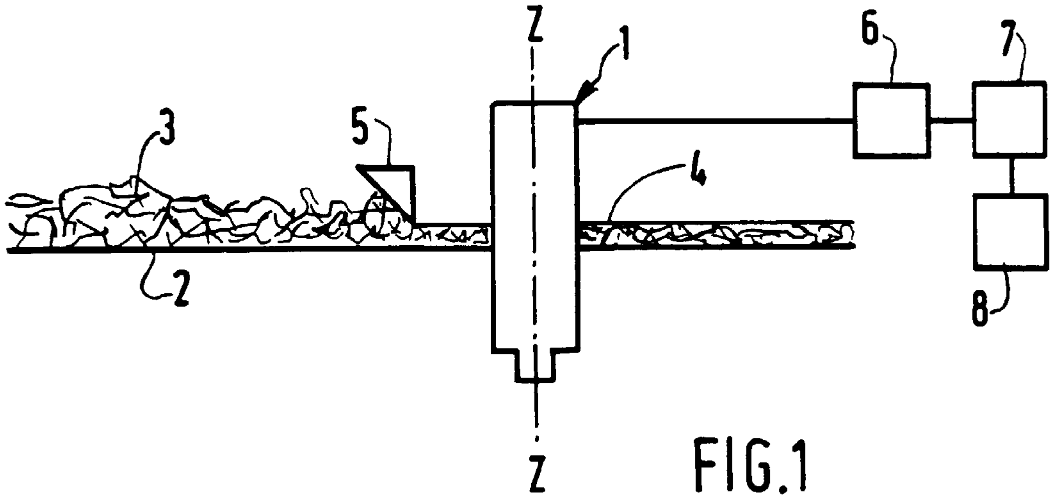


FIG.1

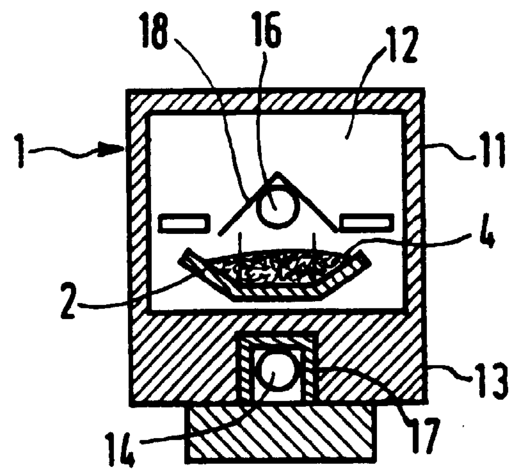


FIG.2

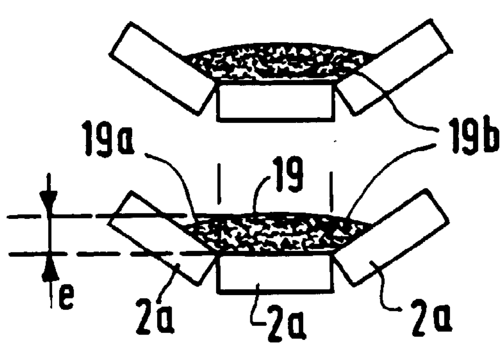


FIG.3

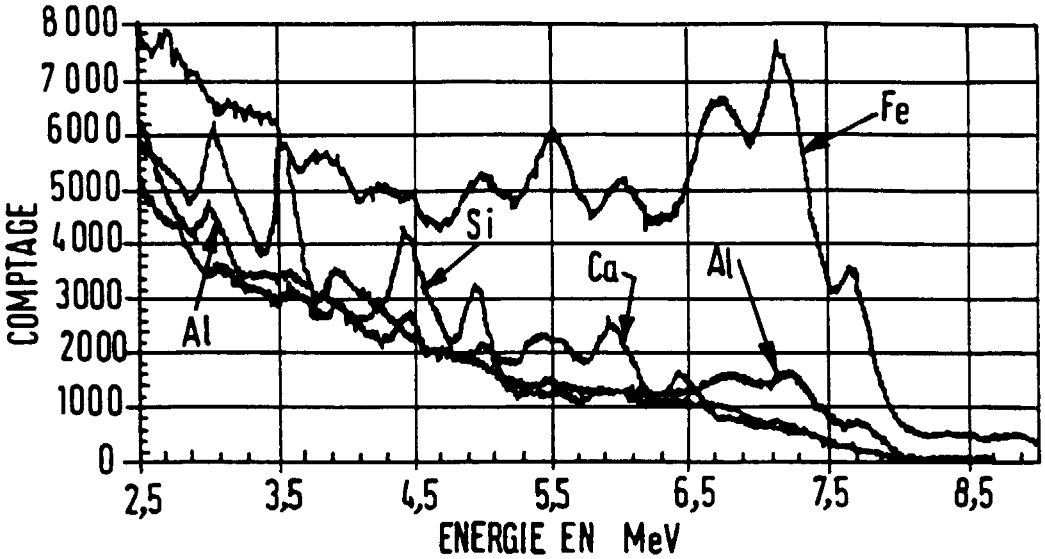
8000
7000
6000
5000
4000
3000
2000
1000
0
COMPTAGE
Fe
Si
Ca
Al
Al
2,5
3,5
4,5
5,5
6,5
7,5
8,5
ENERGIE EN MeV

FIG. 4

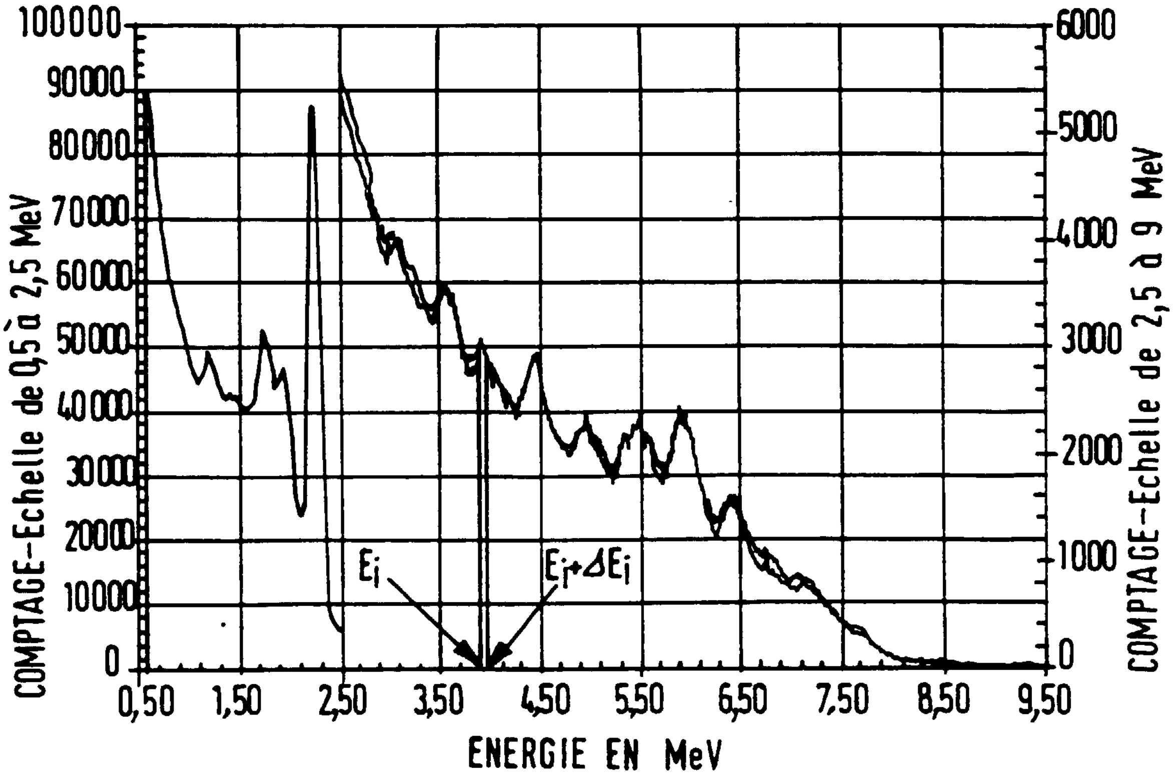
100000
90000
80000
70000
60000
50000
40000
30000
20000
10000
0
COMPTAGE-Echelle de 0,5 à 2,5 MeV
6000
5000
4000
3000
2000
1000
0
COMPTAGE-Echelle de 2,5 à 9 MeV
Ei
Ei+ΔEi
0,50
1,50
2,50
3,50
4,50
5,50
6,50
7,50
8,50
9,50
ENERGIE EN MeV

FIG.5